Europäisches Patentamt

European Patent Office

Office européen des brevets

(19)

(11) Veröffentlichungsnummer: **0 099 901**
**B1**

(12) EUROPÄISCHE PATENTSCHRIFT

(45) Veröffentlichungstag der Patentschrift:
16.10.85

(51) Int. Cl.⁴: **B 01 D 11/02**

(21) Anmeldenummer: **83900342.3**

(22) Anmeldetag: **18.01.83**

(86) Internationale Anmeldenummer:
**PCT/EP 83/00012**

(87) Internationale Veröffentlichungsnummer:
**WO 83/02571 (04.08.83** Gazette 83/18)

(54) EXTRAKTOR ZUR FLÜSSIG/FEST-EXTRAKTION VON EXTRAKTIVSTOFFEN AUS NATÜRLICHEN STOFFEN.

(30) Priorität: **30.01.82 DE 3203099**
**30.01.82 DE 3203098**

(43) Veröffentlichungstag der Anmeldung:
**08.02.84 Patentblatt 84/6**

(45) Bekanntmachung des Hinweises auf die Patenterteilung:
**16.10.85 Patentblatt 85/42**

(84) Benannte Vertragsstaaten:
**AT BE CH DE FR GB LI LU NL SE**

(56) Entgegenhaltungen:
**DE - A - 2 611 456**
**FR - A - 1 153 176**
**FR - A - 2 224 187**

(73) Patentinhaber: **MITTEX AKTIENGESELLSCHAFT,**
**Aeulestrasse 5, FL-9490 Vaduz (LI)**

(72) Erfinder: **HUSSMANN, Peter, Via dei Pucci 4,**
**I-50100 Florenz (IT)**

(74) Vertreter: **Haug, Dietmar et al, Patentanwälte Andrae,**
**Flach, Haug Steinstrasse 44, D-8000 München 80 (DE)**

ACTORUM AG

**Beschreibung**

Die Erfindung betrifft einen Extraktor zur Flüssig/Fest-Extraktion von Extraktivstoffen aus natürlichen Stoffen, mit einem Gehäuse, einem im Gehäuse angeordneten, ebenen Filterboden, der einen darüberliegenden Aufnahmeraum für das Extraktionsgut von einem darunterliegenden Sammelraum für die angereicherte Extraktionsflüssigkeit trennt.

Abhängig von der Art des auf einem solchen Extraktor durchzuführenden Extraktionsverfahrens, vom Extraktionsgut, von dessen Teilchengrösse, vom Zweck, der mit der Extraktion verfolgt wird, und von anderen Parametern sind vor, nach oder während der Extraktion in dem Extraktor verschiedene die Extraktionsmasse betreffende Arbeitsvorgänge durchzuführen, wie z.B. Rühren der Extraktionsmasse, Zustreichen von sich während der Extraktion bildenden Rissen in der Oberfläche der Extraktionsmasse, Andrücken von Randablösungen der Extraktionsmasse, Entfernen des Extraktionsrückstandes usw., um jeweils optimale Verfahrensergebnisse zu erzielen. Um diese Funktionen möglichst automatisch steuerbar ausführen zu können, soll der gattungsgemässe Extraktor entsprechend ausgebildet werden.

Zur Lösung dieser Aufgabe wird erfindungsgemäss oberhalb des Filterbodens ein um eine im wesentlichen parallele Achse zum Filterboden verschwenkbares Traggerüst mit mehreren verschiedenartig auf die Extraktionsmasse einwirkenden, drehbaren Vorrichtungen angeordnet, die jeweils durch Verschwenken des Traggerüsts aus einer Ruhestellung in eine Arbeitsstellung und wieder zurück in die Ruhestellung bringbar sind und die jeweils in ihrer Arbeitsstellung um eine im wesentlichen senkrecht auf dem Filterboden stehende Achse rotierbar sind.

Eine der Vorrichtungen kann z.B. ein Rührwerkzeug aufweisen, eine weitere Vorrichtung kann z.B. ein Zustreichwerkzeug haben, eine dritte Vorrichtung kann z.B. mit einer Saugdüse zum Absaugen der Extraktionsmasse zwischen den Stufen eines Gegenstromverfahrens ausgerüstet sein und eine vierte Vorrichtung kann z.B. eine Saugdüse für den Extraktionsrückstand aufweisen. Mit dem Absaugen der Extraktionsmasse bzw. des -rückstandes wird gleichzeitig der Filterboden von oben her gereinigt, so dass im weiteren Verlauf des Extraktionsverfahrens ein Zusetzen des Filterbodens mit Extraktionsmasseteilchen vermieden ist.

Diese Vorrichtungen sind vorzugsweise von einer gemeinsamen Welle über ein Schaltgetriebe selektiv antreibbar. Hierbei kann die gemeinsame Antriebswelle als Saugrohr ausgebildet sein, das mit einer der Saugdüsen über eine ein flexibles Rohrteil aufweisende Saugwelle ständig verbunden ist, wobei die Antriebswelle und die den flexiblen Rohrteil aufweisende Saugwelle relativ zueinander verdrehbar sind.

Das Traggerüst kann mit einer Welle antriebsmässig verbindbar sein, die als Saugrohr ausgebildet ist, das über eine ein flexibles Rohrteil aufweisende Saugwelle mit der anderen Saugdüse ständig verbunden ist, wobei die Saugwelle und die Antriebswelle relativ zueinander verdrehbar sind. Das Traggerüst mit den verschiedenen Vorrichtungen kann heb- und senkbar sein, so dass die jeweils in Arbeitsstellung befindliche Vorrichtung aus dem Extraktionsgehäuse herausfahrbar und die durch Verschwenken des Traggerüsts in Stellung gebrachte andere Vorrichtung in das Gehäuse des Extraktors hinein absenkbar ist.

Bei einem Ausführungsbeispiel des Extraktors weist das Rührwerk zwei Bürstenwalzen auf, die in Arbeitsstellung um ihre im wesentlichen parallel zum Filterboden verlaufende Achse rotierbar sind. Als Rührwerk könnten auch einfache Rührarme verwendet werden. Bei dem Ausführungsbeispiel weist das Schaltgetriebe ein an der gemeinsamen Antriebswelle befestigtes Zahnrad auf, in welches mit der jeweiligen Vorrichtung antriebsmässig verbundene Ritzel selektiv einrückbar sind. Hierbei kann jedes Ritzel mit jeweils einer druckbeaufschlagbaren Kolben/Zylindereinheit verbunden sein, die zum Ein- bzw. Ausrücken des Ritzels betätigbar ist. Die Betätigung der Kolben/Zylindereinheiten zum Ein- und Ausrücken der Ritzel für den selektiven Antrieb der Vorrichtungen ist automatisch steuerbar.

Eine bevorzugte Anwendung findet der Extraktor nach der Erfindung bei der Extraktion von Bitterstoffen aus Bitterlupinen. Eine andere bevorzugte Anwendung des erfindungsgemässen Extraktors dient der Extraktion von Kaffee. Er kann aber auch mit Erfolg zur Extraktion von Heilkräutern und -pflanzen, Tees, Hopfendolden, Früchten und zur Herstellung von Fisch- und Fleischextrakten verwendet werden. Je nach Einsatz sind mehr oder weniger verschiedene Arbeitsvorrichtungen an dem Extraktor vorgesehen.

Ein Ausführungsbeispiel der Erfindung ist in den Zeichnungen dargestellt und wird im folgenden beschrieben. Es zeigen

Fig. 1 einen Extraktor nach der Erfindung, teilweise in Schnittdarstellung, mit einem Rührwerk in Arbeitsstellung und den übrigen Vorrichtungen in Ruhestellung, wobei von den übrigen Vorrichtungen eine Saugvorrichtung zum Absaugen des Extraktionsrückstandes ersichtlich ist,

Fig. 2 das Traggerüst des in Fig. 1 dargestellten Extraktors, teilweise in einer Schnittdarstellung, in einer anderen als in Fig. 1 dargestellten Winkelstellung, wobei eine Zustreichvorrichtung in Arbeitsstellung und die übrigen drei Vorrichtungen in Ruhestellung sind, von denen lediglich eine weitere Absaugvorrichtung für die Extraktionsmasse ersichtlich ist,

Fig. 3 einen Schnitt A-A durch die in Fig. 2 dargestellte Zustreichvorrichtung und

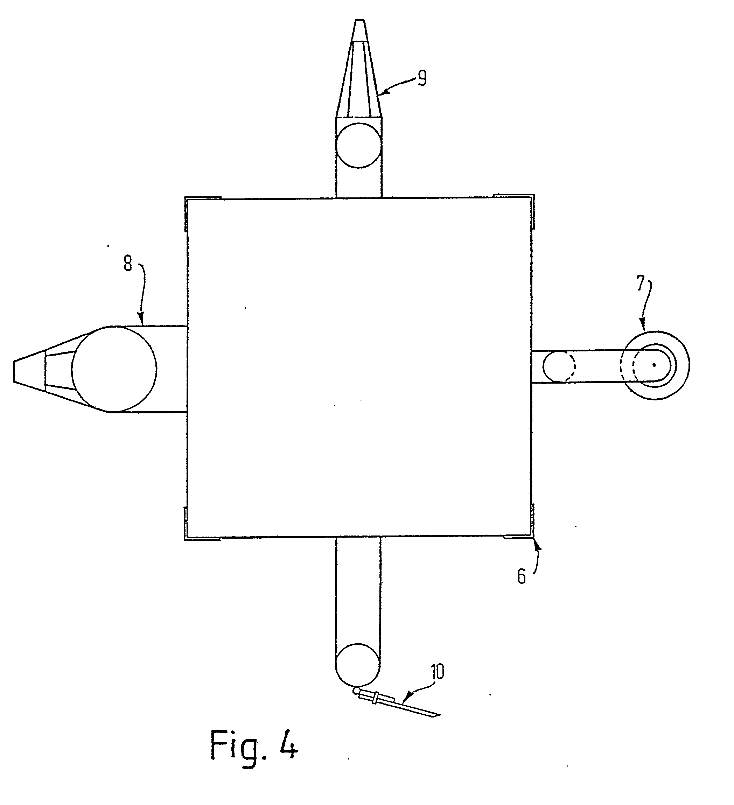

Fig. 4 eine vereinfachte Endansicht des Traggerüsts in Richtung des in Fig. 2 eingezeichneten Pfeiles B, wobei alle vier Vorrichtungen ersichtlich sind.

Ein Extraktor nach der Erfindung weist ein Gehäuse 1 auf, in welchem ein feinstporöser Filterboden 2 angeordnet ist, der im wesentlichen aus einem feinstmaschigen monofilen Gewebe besteht, das auf einem Stützrost angeordnet ist. Der Filterboden 2 trennt einen oberhalb angeordneten Aufnahmeraum 3 für die Extraktionsmasse von einem Sammelraum 4 für die angereicherte Extraktionsflüssigkeit. Am unteren Ende des Sammelraums 4 befindet sich ein Absaugrohr 5 für die angereicherte Extraktionsflüssigkeit.

Oberhalb des Filterbodens 2 befindet sich ein Traggerüst 6 für ein Rührwerk 7, eine Absaugvorrichtung 8 für den Extraktionsrückstand, eine weitere Absaugvorrichtung 9 für die Extraktionsmasse und eine Zustreichvorrichtung oder Zustreichwerkzeug 10 zum Zustreichen von in der Oberfläche der Extraktionsmasse sich bildenden Rissen. Das Traggerüst 6 ist auf Stützen 11 gelagert, die mittels Hydraulikvorrichtungen 12 relativ zum Gehäuse 1 heb- und senkbar sind.

Das Traggerüst 6 besteht im wesentlichen aus einem langgestreckten, quer angeordneten Gehäuse, das in den Stützen 11 um eine im wesentlichen parallel zum Filterboden 2 verlaufende Achse drehbar gelagert ist. Für die Drehung des Traggerüsts 6 ist ein Antriebsmotor 13 vorgesehen, der mit einer Welle 14 antriebsmässig verbunden ist, die über ein druckluftgesteuertes Schaltgetriebe 15 mit dem Traggerüst verbindbar ist. Die Antriebswelle 14 ist hohl und ragt in das Traggerüst 6 an einem Ende hinein. Dort ist sie an ein Saugrohr 16 der Saugvorrichtung 8 angeschlossen. Das Saugrohr 16 weist an seinem Anschluss mit der Antriebswelle 14 ein flexibles Rohrstück 17 auf, das innerhalb des Traggerüsts 6 um 90° umgelenkt ist und an ein starres Rohrstück 18, das aus dem Traggerüst wieder herausführt, angeschlossen ist. Das Rohrstück 18 ist in dem Rohrstück 17 am Anschluss drehbar gelagert. Ausserhalb des Traggerüsts 6 ist das Rohrstück 18 um 90° umgelenkt und an einen waagrechten Rohrarm 19 angeschlossen, der an seinem äusseren Ende eine Saugdüse 20 trägt.

An seinem anderen Ende ist das Traggerüst 6 auf einer Welle 21 abgestützt, die in einer der Stützen 11 drehbar gelagert ist. Durch die Welle 21 führt koaxial eine hohle Antriebswelle 22 von aussen in das Traggerüst 6 hinein. Dort ist sie antriebsmässig selektiv mit den vier Vorrichtungen 7, 8, 9 und 10 verbindbar. Die Welle 22 ist von einem Motor 34 aus antreibbar. Innerhalb des Traggerüsts 6 ist die Welle 22 an ein Saugrohr 23 der Vorrichtung 9 angeschlossen, wobei die Welle 22 und das Saugrohr 23 an ihrem Anschluss relativ zueinander drehbar sind. Das Saugrohr 23 ist an die Welle 22 mit einem flexiblen Rohrstück 24 angeschlossen, das innerhalb des Traggerüsts 6 um 90° umgelenkt ist und mit einem starren Rohrstück 25 verbunden ist. Das Rohrstück 25 führt aus dem Traggerüst heraus und ist ausserhalb des Traggerüsts mit einem waagrechten Rohrarm 26 verbunden, der an seinem äusseren Ende eine Saugdüse 27 trägt.

In der Nähe der Anschlussstelle ist auf der Welle 22 ein Zahnrad, z.B. ein Kegelrad 28 angeordnet, in welches jeweils eines von vier schwenkbar gelagerten Antriebsritzeln 29 für den Antrieb der einzelnen Vorrichtungen einrückbar ist. Die Ritzel 29 sind jeweils mit druckluftbeaufschlagten Kolben/ Zylindereinheiten 30 verbunden, die bei Betätigung die Ritzel 29 verschwenken, wodurch sie ein- bzw. ausgerückt werden.

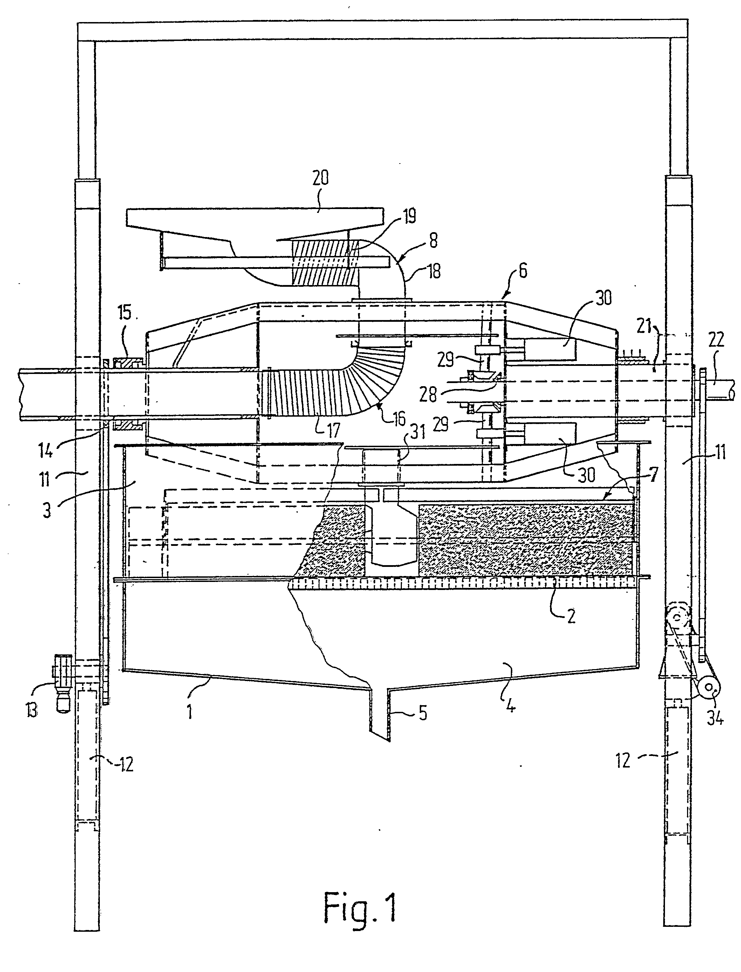

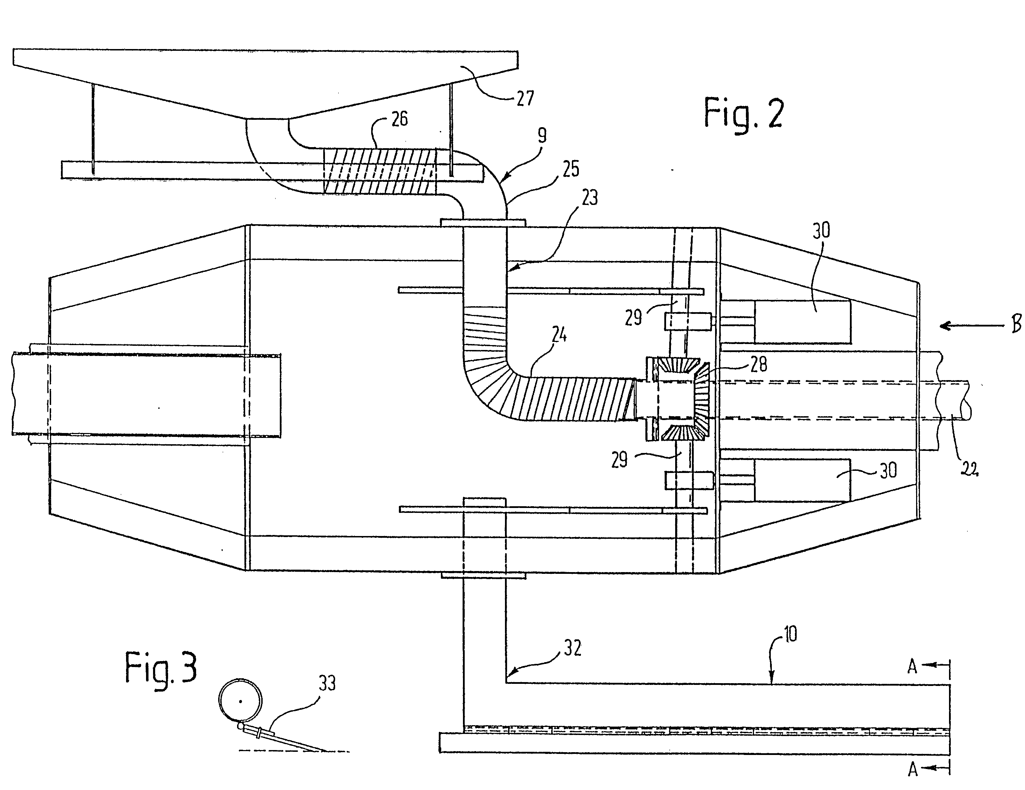

Eines der Ritzel 29 ist antriebsmässig mit dem Rührwerk 7 verbunden und ist in Fig. 1 im eingerückten Zustand dargestellt. Das andere in Fig. 1 dargestellte Ritzel ist ausgerückt und antriebsmässig mit dem starren Rohrstück 18 des Saugrohres 16 der Vorrichtung 8 verbunden. Ein weiteres Ritzel 29 ist antriebsmässig mit der Zustreichvorrichtung 10 verbunden und in Fig. 2 im eingerückten Zustand dargestellt. Das andere in Fig. 2 dargestellte Ritzel ist ausgerückt und antriebsmässig mit dem starren Rohrstück 25 des Saugrohres 23 der Vorrichtung 9 verbunden.

Beim Einrücken eines der beiden mit den Saugvorrichtungen 8 und 9 verbundenen Ritzel 29 in das Kegelrad 28 wird das jeweilige starre Rohrstück 18 bzw. 25 der Saugrohre 16 bzw. 23 um seine Achse gedreht, wodurch die jeweilige Saugdüse 20 bzw. 27 eine Kreisbewegung um diese Achse ausführt. In Arbeitsstellung wird das abgesaugte Gut durch die Rohre 23 und 22 bzw. durch die Rohre 16 und 14 abgeführt.

Das Rührwerk 7 besteht im wesentlichen aus zwei drehbaren Bürstenwalzen, die gemeinsam auf einer im Traggerüst 6 gelagerten drehbaren Welle 31 befestigt sind, die mit einem der Ritzel 29 antriebsmässig verbunden ist.

Die Zustreichvorrichtung 10 besteht im wesentlichen aus einem Winkelarm 32, dessen eines Teilstück ein federnd gelagertes Messer 33 trägt und dessen anderes Teilstück im Traggerüst 6 drehbar gelagert ist. Mit dem drehbar gelagerten Teilstück ist das entsprechende Ritzel 29 antriebsmässig verbunden.

Jede der vier Vorrichtungen 7, 8, 9 und 10 kann durch Verschwenken des Traggerüsts 6 von einer Ruhestellung in eine Arbeitsstellung und wieder zurück in die Ruhestellung gebracht werden. In Fig. 1 ist die Rührvorrichtung in der Arbeitsstellung dargestellt. Um eine andere Vorrichtung in die Arbeitsstellung zu bringen, wird das Traggerüst angehoben und so weit verschwenkt, bis die andere Vorrichtung oberhalb des Filterbodens ist. Danach wird das Traggerüst 6 wieder abgesenkt und die in die Arbeitsstellung gebrachte Vorrichtung kann durch Einrücken des entsprechenden Ritzels 29 in Drehbewegung versetzt werden. Die Bewegungsabläufe des Traggerüsts und der einzelnen Vorrichtungen sind automatisch steuerbar.

Für einen grossindustriellen Einsatz kann der Extraktor einen Durchmesser von z.B. 80 m haben. Um bei einem Extraktor dieser Grösse sicherzustellen, dass die verschiedenen Arbeitsvorrichtungen auf ebenen Kreisbahnen mit gleichbleibendem Abstand zu dem Filtermedium rotieren können, werden die Arbeitsvorrichtungen fest mit dem Traggerüst verbunden und das Traggerüst auf dem Rand des Extraktionsgehäuses drehbar gelagert. Das Traggerüst muss auch entsprechend steif ausgebildet sein, um eine Durchbiegung zu vermeiden.

## Patentansprüche

1. Extraktor zur Flüssig/Fest-Extraktion von Extraktivstoffen aus natürlichen Stoffen, mit einem Gehäuse, einem im Gehäuse angeordneten ebenen Filterboden, der einen darüberliegenden Aufnahmeraum für das Extraktionsgut von einem darunterliegenden Sammelraum für die angereicherte Extraktionsflüssigkeit trennt, dadurch gekennzeichnet, dass oberhalb des Filterbodens (2) ein um eine im wesentlichen parallele Achse zum Filterboden (2) verschwenkbares Traggerüst (6) mit mehreren verschiedenartig auf die Extraktionsmasse einwirkenden drehbaren Vorrichtungen (7, 8, 9, 10) angeordnet ist, die jeweils durch Verschwenken des Traggerüsts (6) aus einer Ruhestellung in eine Arbeitsstellung und wieder zurück in die Ruhestellung bringbar sind und die jeweils in ihrer Arbeitsstellung um eine im wesentlichen senkrecht auf dem Filterboden (2) stehende Achse rotierbar sind.

2. Extraktor nach Anspruch 1, dadurch gekennzeichnet, dass eine der Vorrichtungen (7) ein Rührwerk aufweist.

3. Extraktor nach Anspruch 1 oder Anspruch 2, dadurch gekennzeichnet, dass eine weitere Vorrichtung (10) ein Zustreichwerkzeug zum Zustreichen von sich in der Oberfläche der Extraktionsmasse bildenden Rissen aufweist.

4. Extraktor nach einem der vorhergehenden Ansprüche, dadurch gekennzeichnet, dass eine dritte Vorrichtung (9) eine Saugdüse (27) für die Extraktionsmasse aufweist.

5. Extraktor nach einem der vorhergehenden Ansprüche, dadurch gekennzeichnet, dass eine vierte Vorrichtung (8) eine Saugdüse (20) für den Extraktionsrückstand aufweist.

6. Extraktor nach einem der vorhergehenden Ansprüche, dadurch gekennzeichnet, dass die Vorrichtungen (7, 8, 9 und 10) von einer gemeinsamen Antriebswelle (22) über ein Schaltgetriebe (28, 29, 30) selektiv antreibbar sind.

7. Extraktor nach Anspruch 6, dadurch gekennzeichnet, dass die gemeinsame Antriebswelle (22) als Saugrohr ausgebildet ist, das mit einer der Saugdüsen (27) verbunden ist.

8. Extraktor nach einem der vorhergehenden Ansprüche, dadurch gekennzeichnet, dass das Traggerüst (6) mit einer Welle (14) antriebsmässig verbindbar ist, die als Saugrohr ausgebildet ist, das mit der anderen Saugdüse (20) verbunden ist.

9. Extraktor nach einem der vorhergehenden Ansprüche, dadurch gekennzeichnet, dass das Traggerüst (6) mit den verschiedenen Vorrichtungen (7, 8, 9, 10) heb- und senkbar ist.

10. Extraktor nach einem der vorhergehenden Ansprüche 2 bis 9, dadurch gekennzeichnet, dass das Rührwerk (7) zwei Bürstenwalzen aufweist, die in Arbeitsstellung um ihre Längsachsen rotierbar sind.

11. Extraktor nach einem der Ansprüche 6 bis 10, dadurch gekennzeichnet, dass das Schaltgetriebe ein an der gemeinsamen Antriebswelle (22) befestigtes Zahnrad (28) aufweist, in welches mit den Vorrichtungen antriebsmässig verbundene Ritzel (29) selektiv einrückbar sind.

12. Extraktor nach Anspruch 11, dadurch gekennzeichnet, dass jedes Ritzel (29) mit einer druckbeaufschlagbaren Kolben/Zylindereinheit (30) verbunden ist, die zum Einrücken bzw. Ausrücken des Ritzels betätigbar ist.

13. Extraktor nach Anspruch 12, dadurch gekennzeichnet, dass die Betätigung der Kolben/Zylindereinheiten zum Ein- und Ausrücken der Ritzel (29) für den selektiven Antrieb der Vorrichtungen (7, 8, 9, 10) automatisch steuerbar ist.

14. Anwendung des Extraktors nach einem der vorhergehenden Ansprüche zur Extraktion von Bitterstoffen aus Bitterlupinen.

15. Anwendung des Extraktors nach einem der Ansprüche 1 bis 13 zur Extraktion von Kaffee.

## Claims

1. An extractor for the liquid/solid-extraction of extractive substances from natural substances, comprising a housing, a planar filter base arranged in the housing, which base separates a receiving space disposed thereabove for the extraction material from a collecting space for the enriched extraction liquid disposed therebeneath, characterized in that there is arranged above the filter base (2) a supporting structure (6) pivotable about a substantially parallel axis relative to the filter base (2) and having a plurality of different rotatable devices (7, 8, 9, 10) acting upon the extraction composition (mass), the devices respectively being adapted, through pivoting of the supporting structure (6), to be moved from a position of rest into an operative position and back into the position of rest again, and which in respectively their operative position are adapted to rotate about an axis disposed substantially perpendicularly on the filter base (2).

2. An extractor as according to claim 1, characterized in that one of the devices (7) includes an agitating mechanism.

3. An extractor as according to claim 1 or claim 2, characterized in that one further device (10) includes a brushing tool serving to close by means of brushing any cracks forming in the surface of the extraction composition.

4. An extractor as according to one of the preceding claims, characterized in that a third device (9) includes a suction nozzle (27) for the extraction composition.

5. An extractor as according to one of the preceding claims, characterized in that a fourth device (8) includes a suction nozzle (20) for the extraction residue.

6. An extractor as according to one of the preceding claims, characterized in that the devices (7, 8, 9 and 10) are adapted to be selectively driven by a common driveshaft (22) through a controlling mechanism (28, 29, 30).

7. An extractor as according to claim 6, characterized in that the common driveshaft (22) is de-

901**  8

signed as suction pipe, which is connected to one of the suction nozzles (27).

8. An extractor as according to one of the preceding claims, characterized in that the supporting structure (6) is adapted to be drivingly connected to a shaft (14), which is designed as suction pipe, which is connected to the other suction nozzle (20).

9. An extractor as according to one of the preceding claims, characterized in that the supporting structure (6) with the various devices (7, 8, 9, 10) is adapted to be lifted and lowered.

10. An extractor as according to one of the preceding claims 2 to 9, characterized in that the agitating mechanism (7) includes two brush rollers, which in operative position are rotatable about their longitudinal axes.

11. An extractor as according to one of claims 6 to 10, characterized in that the control mechanism (gear-shift mechanism) includes a gear wheel (28), into which pinions (29) drivingly connected to the devices are adapted to selectively engage.

12. An extractor as according to claim 11, characterized in that each pinion (29) is connected to a piston/cylinder-unit (30) adapted to be acted upon by pressure, which unit is actuable for engagement or, resp., disengagement of the pinion.

13. An extractor as according to claim 12, characterized in that actuation of the piston/cylinder-units for engaging and disengaging the pinion (29) is controllable automatically for selectively driving the devices (7, 8, 9, 10).

14. The use of the extractor as according to one of the preceding claims for the extraction of bitter principles from bitter lupins.

15. The use of the extractor as according to one of claims 1 to 13 for extraction of coffee.

## Revendications

1. Extracteur pour l'extraction liquide/solide de substances extractives à partir de substances naturelles, comportant un boîtier, un fond plan de filtre, qui est disposé dans le boîtier et qui sépare un espace de réception placé au-dessus, pour le produit d'extraction, d'un espace collecteur, placé en dessous, pour le liquide d'extraction enrichi, caractérisé en ce qu'au-dessus du fond de filtre (2), il est disposé un châssis porteur (6) pouvant pivoter par rapport au fond de filtre (2) autour d'un axe essentiellement parallèle, ce châssis comportant plusieurs dispositifs tournants (7, 8, 9, 10), qui agissent différemment sur la masse d'extraction et qui peuvent être amenés chaque fois, par pivotement du châssis porteur (6), d'une position de repos dans une position de travail et inversement et qui peuvent tourner chaque fois, dans leur position de travail, autour d'un axe placé essentiellement verticalement sur le fond de filtre (2).

2. Extracteur suivant la revendication 1, caractérisé en ce qu'un des dispositifs (7) présente un agitateur.

3. Extracteur suivant l'une des revendications 1 ou 2, caractérisé en ce qu'un autre dispositif (10) présente un outil pour enduire des fissures qui se forment à la surface de la masse d'extraction.

4. Extracteur suivant une des revendications précédentes, caractérisé en ce qu'un troisième dispositif (9) présente une buse d'aspiration (27) pour la masse d'extraction.

5. Extracteur suivant une des revendications précédentes, caractérisé en ce qu'un quatrième dispositif (8) présente une buse d'aspiration (20) pour le résidu d'extraction.

6. Extracteur suivant une des revendications précédentes, caractérisé en ce que les dispositifs (7, 8, 9 et 10) sont entraînables sélectivement par un arbre moteur commun (22), par l'intermédiaire d'une boîte d'engrenages (28, 29, 30).

7. Extracteur suivant la revendication 6, caractérisé en ce que l'arbre d'entraînement commun (22) est un tube d'aspiration, qui est relié à une des buses d'aspiration (27).

8. Extracteur suivant une des revendications précédentes, caractérisé en ce que le châssis porteur (6) peut être relié, pour entraînement, à un arbre (14), qui est un tube d'aspiration relié à l'autre buse d'aspiration (20).

9. Extracteur suivant une des revendications précédentes, caractérisé en ce que le châssis porteur (6) peut être élevé et abaissé avec les différents dispositifs (7, 8, 9, 10).

10. Dispositif suivant une des revendications précédentes 2 à 9, caractérisé en ce que l'agitateur (7) comporte deux rouleaux à brosses, qui peuvent tourner, en position de travail, autour de leurs axes longitudinaux.

11. Extracteur suivant une des revendications 6 à 10, caractérisé en ce que la boîte d'engrenages comporte une roue dentée (28) fixée à l'arbre d'entraînement commun (22) et dans laquelle des pignons (29), solidaires des dispositifs en ce qui concerne l'entraînement, peuvent engrener sélectivement.

12. Extracteur suivant la revendication 11, caractérisé en ce que chaque pignon (29) a une unité piston/cylindre (30), qui peut être soumise à pression et qui peut être actionnée pour l'embrayage et/ou le débrayage du pignon.

13. Extracteur suivant la revendication 12, caractérisé en ce que l'actionnement des unités piston/cylindre d'embrayage et de débrayage des pignons (29) pour l'entraînement sélectif des dispositifs (7, 8, 9, 10) peut être commandé sélectivement.

14. Utilisation de l'extracteur suivant une des revendications précédentes pour l'extraction de substances amères à partir de lupins amers.

15. Utilisation de l'extracteur suivant une des revendications 1 à 13 pour l'extraction de café.

Fig.1

Fig. 2

Fig. 3

Fig. 4